# EUROPEAN PATENT APPLICATION

(11) **EP 2 027 988 A1**
(43) Date of publication of application: **25.02.2009**
(21) Application number: 07114700.3
(22) Date of filing: 21.08.2007
(51) Int. Cl.: B29C 51/30, B29C 33/38, B44C 3/04, B29C 51/14, B29C 35/08

(54) **Custom thermoformed decoration**

(71) Applicant: 3M Innovative Properties Company, St. Paul MN 55144-1000 (US)
(72) Inventor: Muller, Carlo, 1831 Diegem (BE); Scott, Martin, 1831 Diegem (BE); Moguet, Fabrice, 1831 Diegem (BE); Lando, Matteo, 1831 Diegem (BE)
(74) Representative: Voortmans, Gilbert J.L.

(57) **Abstract**

Methods of obtaining custom decorated articies using a thermoforming process are described. The methods include obtaining a desired design, converting the design into three-dimensional coordinates, which are used to create a relief-patterned surface (121,221) on a mold (120,220) corresponding to the design, and thermoforming a sheet using the mold.

## Description

### FIELD

The present disclosure relates to methods for forming an article having a customized decorative surface using thermoforming and articles formed by such methods.

### SUMMARY

Briefly, in one aspect, the present disclosure provides a method of obtaining a custom decorated article comprising obtaining a design; converting the design into three-dimensional coordinate data; using the data to create a relief-patterned surface on a mold; contacting a thermoformable sheet with the relief-patterned surface of the mold; and thermoforming the thermoformable sheet to provide a thermoformed sheet comprising a three-dimensional decoration corresponding to the design.

In some embodiments, obtaining the design comprises scanning an image. In some embodiments, the design comprises a signature. In some embodiments, the three-dimensional coordinate data are used to control the motion of a tool that removes material from a surface of the mold. In some embodiments, a CNC device is used to control the motion of the tool.

In some embodiments, thermoforming the thermoformable sheet comprises heating the thermoformable sheet, pressing the mold against the thermoformable sheet, and applying vacuum thereto to allow the thermoformable sheet to wrap around the relief-patterned surface of the mold. In some embodiments, the thermoformed sheet is removed from the mold and mounted on a part to form the custom decorated article. In some embodiments, the mold is a part and the thermoformed sheet remains in contact with the part to form the custom decorated article.

In some embodiments, the thermoformable sheet comprises a material selected from the group comprising polycarbonate, polyethyleneterephthalate glycol (PETG), acrylonitrile butadiene styrene (ABS), thermoplastic polyolefin (TPO), polypropylene, acrylic compounds and mixtures thereof.

In some embodiments, the thermoformable sheet further comprises an ink layer. in some embodiments, the ink layer is obtained by screen printing a curable ink composition on a first major surface of the thermoformable substrate and curing the curable ink composition. In some embodiments, the curable ink composition comprises a component having isocyanate reactive groups and a polyisocyanate. In some embodiments, contacting the thermoformable sheet with the relief-patterned surface of the mold comprises contacting the ink layer with the relief-patterned surface of the mold.

In some embodiments, the thermoformable sheet further comprises a thermoformable adhesive layer.

In another aspect, the present disclosure provides a custom decorated article obtainable by any of the methods disclosed herein.

The above summary of the present disclosure is not intended to describe each embodiment of the present invention. The details of one or more embodiments of the invention are also set forth in the description below. Other features, objects, and advantages of the invention will be apparent from the description and from the claims.

### BRIEF DESCRIPTION OF THE DRAWINGS

**FIG. 1** illustrates an exemplary thermoformable sheet according to some embodiments of the present disclosure.
**FIG. 2** illustrates an exemplary mold wherein the design is recessed relative to the mold surface.
**FIG. 3** illustrates an exemplary mold wherein the design is elevated relative to the mold surface.

### DETAILED DESCRIPTION

Decorated articles may find application in a variety of industries involving including, e.g., the automotive industry, including parts for all type of vehicles, i.e. cars, motorbikes, and trucks. For example, the parts of the vehicle that may carry a decorative plastic part include fuel tank covers, side mirror covers, door handles, pillars, and window supports. Typically, these designs have changed from one season to another and hence the number of vehicle parts with a particular design was limited. In some applications, further customization may be desirable, e.g., unique, custom designs for a particular customer, vehicle, or part.

Typically, the decorations applied to articles have been two-dimensional, e.g., images printed on a sheet that is then applied to the article. However, three-dimensional decorated articles can provide even greater aesthetic appeal. Demand for such three-dimensional decoration may arise in both in interior applications as well as in exterior applications where the decorated article is exposed to varying weather conditions of, for example, temperature, sunshine, humidity, and precipitation.

Methods for forming articles having decorative surfaces include in-mold decoration (IMD). See for example United States Patent Nos. 4,059,471; 4,650,533; 4,356,230 and 4,202,663. IMD combines the process of forming an article by injection molding with the decoration of the resulting article. Generally, a polymeric carrier sheet, optionally bearing a printed image, is placed in the cavity of an injection molding tool. Molten thermoplastic resin is then injected into the cavity to contact the carrier sheet. With suitable design of the injection molding tool, the polymeric carrier sheet becomes integral to the resulting molded article. This is contrasted with the process described, for example, in European Patent application No. 799,681, where an image is transferred onto an article during the injection molding process.

The injection molding technique can provide good results in terms of quality and precision, and may be used to decorate articles having a complex shape. However, it is very difficult and expensive to make modifications to the molds to provide customization of the decoration.

In some embodiments, articles having a custom, three-dimensional decoration may be obtained by the methods of the present disclosure. In some embodiments, three-dimensional decorated articles can be produced in a cost effective and convenient way. In some embodiments, methods of the present disclosure allow forming three-dimensional decorations that include sharp angles (e.g., angles of approximately 90 degrees, angles of less than 90, 85, 80, 75, 70, 65, 60, 55, 50 or 45 degrees, or even smaller angles) without the visible (i.e., with normal unaided human eyesight) appearance of cracking in the decorative design. In addition, in some embodiments, the present methods can allow three-dimensional decorative articles to be formed that result in the decorative design being substantially elongated (e.g., up to a percent elongation of 120%, 140%, 160%, 180% or even greater) without the visible (i.e., with normal unaided human eyesight) appearance of cracking in the decorative design.

Generally, in one aspect, the present disclosure provides methods of custom decorating an article comprising contacting a thermoformable polymeric sheet with a custom relief-patterned surface of a mold and thermoforming the polymeric sheet. In some embodiments, the methods of the present disclosure can be used to produce a limited number of parts having a particular design in a cost-effective manner.

In some embodiments, methods of the present disclosure may be used to provide unique custom decorated parts according to a specific customer's requirements. For example, a customer supplied design, e.g., a signature, can be applied to one or more parts of an automobile (e.g., the side windows, and door handles) allowing the customer to receive a custom-designed automobile unique to the customer.

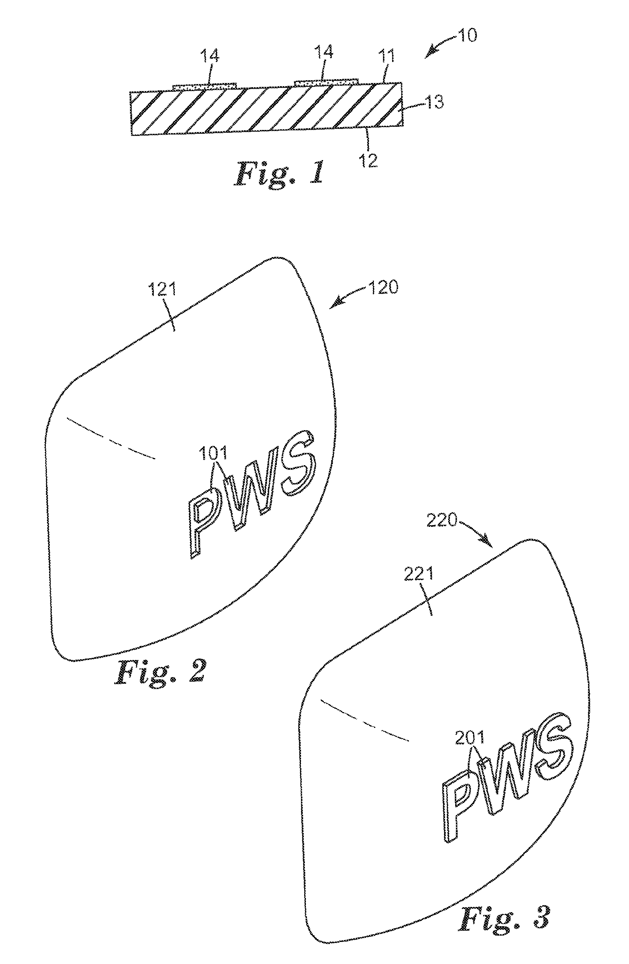

Referring to **FIG. 1**, thermoformable sheet **10** comprises polymeric substrate **13** having first major surface **11** and second major surface **12.** Optional cured ink composition **14** is on the first major surface of the polymeric substrate.

Generally, any known thermoformable polymeric substrate may be used.
Exemplary thermoformable polymeric sheets include conventional thermoplastic polymer material such as, for example, polycarbonate, polyesters, polyacrylates, polystyrene, polyethyleneterephthalate glycole (PETG), acrylonitrile butadiene styrene (ABS), thermoplastic polyolefin (TPO), polypropylene, acrylic compounds, and mixtures thereof. The substrate may be a single layer structure or a multilayered structure.

Due to superior mechanical and thermal properties, polycarbonate may be preferred in the manufacturing of numerous part and components, e.g., parts used in the automotive industry. Specific examples of polycarbonate materials that can be used include, but are not limited to Makrofol® polycarbonate sheets, available from Bayer AG (Darmstadt, Germany). It can be particularly desirable (e.g., for Automotive applications) to use polycarbonate or other thermoformable polymeric sheets that have been adapted to be resistant against degradation caused by ultraviolet (UV) radiation such as, for example, Makrofol® TP244, Makrofol® 1099UV or GE Lexan SLX.

In some embodiments, the polymeric sheet is transparent, e.g., clear transparent. When the thermoformable polymeric sheet is transparent and an ink image is printed on the backside of the polymeric sheet, the top surface (i.e., opposite to the printed ink) can be UV protected. Protecting against UV radiation can significantly improve the durability of the printed ink image and the thermoformable plastic sheet. In some embodiments, the polymeric sheet may be translucent or opaque. In some embodiments, the polymeric sheet may be colored, e.g., dyed or pigmented.

In some embodiments, the thermoformable polymeric sheet typically will have a thickness of at least 0.1 millimeters (mm), e.g., at least 0.2 mm, or even at least 0.25 mm. In some embodiments, the thermoformable polymeric sheet typically will have a thickness of no greater than 10 mm, e.g., no greater than 8 mm, or even no greater than 5 mm.

In some embodiments, the thermoformable polymeric sheet is printed on at least one major surface with an ink composition. In some embodiments, the thermoformable polymeric sheet is printed on both major surfaces. Suitable printing techniques include flexographic printing, pad printing or tampo-printing, screen printing, and digital printing (including, e.g., inkjet printing).

In some embodiments, screen printing is preferred. Screen printing is essentially a stencil printing process which may now be generated by computer with the aid of various software packages. The ability to vary and control ink thickness accurately has made screen printing an extremely useful process for the decoration of many different types of plastic substrates.

In screen printing, as disclosed for example in US Patent No. 6,465,102, a screen or stencil is prepared and bonded to a fine weave fabric which is then tensioned in a rigid frame. The basic screen-printing process involves, for example, the use of a flat bed where generally the substrate is held by vacuum during printing.

The printing step of the method may be repeated one or more times as needed, e.g., once for each color, depending on the number of desired color combinations to be printed on the decorated surface of the final article to obtain a desired full color decorated surface. In some embodiments, e.g., where the printed images at least overlap one on top of the other, it can be desirable to limit the number of times the printing step of the method is repeated in order to avoid interlayer adhesion problems resulting from image stacks that are too thick. It may be desirable to limit such printed image stacks to 5 or 6 layers (i.e., 5 or 6 printing steps) for the same decorative part.

Further, in order to obtain a desired design on a three-dimensional part, it may be necessary to adjust for image deformation occurring when going from the original image on the flat surface of the printed sheet to the final image on the surface of the three-dimensional formed part. This can be readily done with, e.g., the aid of commercially available software such as the Rhino 4.0 Non-Uniform Rational B-Splines (NURBS) software which calculates the image to be printed on the flat thermoformable sheet to obtain an image as desired on the surface of the particular three-dimensional formed part. Also, in some embodiments, the image may be reverse printed so that it appears proper to the viewer when the part is mounted, e.g., on a vehicle.

The ink composition will vary depending on the particular printing technique used. Typically the ink composition will contain dyes and/or pigments that are dissolved or dispersed in a liquid. In a particular embodiment, the ink composition may contain metal particles including for example aluminium particles. In a further embodiment, the ink composition may contain pearlescent pigments.

In some embodiments, the liquid may comprise organic solvents or the liquid may be an aqueous medium. Typically a solvent based ink composition will be used. The ink composition preferably provides an ink coating that has sufficient elongation characteristics such that complex three-dimensional shapes with sharp drawing angles can be produced without the risk of undesirable cracks or other similar defects occurring in the ink printed design. Accordingly, the ink composition will typically include one or more resins or alternatively components that upon activation, for example by heating, produce a resinous coating. In some embodiments, the printed sheet can be elongated by at least 100% or at least 200 % or at least 300% without substantial defects occurring in the printing as evaluated according to DIN EN ISO 4628/2003. Particular artifacts or defects that may occur on elongation of the printed sheet in the thermoforming and that are evaluated according to the aforementioned standard include: cracking (physical cracks or crazing of the ink coating), pin holes (voids in the ink coating), striations (line defects in the direction of elongation), loss of opacity (due to thinning), color change (due to thinning).

In a particular embodiment of the present disclosure, screen printing is used to print the ink composition. In one embodiment, the ink composition suitable for use in screen printing includes one or more organic solvents and one or more resins. Suitable resins include polyester-based resins, polycarbonate-based resins, polyvinyl chloride-based resins, acrylic-based resins, polycaprolactones or similar. Mixtures of synthetic resins can be advantageously employed. The resins may or may not have reactive groups for optional reaction with other components in the composition, for example isocyanate reactive groups for reaction with an isocyanate component in the composition.

Suitable solvents or solvent blends for use with the ink composition include those selected from ketones, such as, for example, cyclohexanone, isophorone, diacetone alcohol, acetophenone, di-isobutyl ketone; esters, such as for example, methoxypropyl acetate, isopropoxyethyl acetate, diethylene glycol ethyl ether acetate, ethylene glycol butyl ether acetate, ethoxyethyl propionate, ethyl lactate, isopropoxyethyl acetate, ethoxypropyl acetate, dimethyl succinate, dimethyl glutarate, dimethyl adipate, butoxyethyl acetate; and amides, such as for example, N-methylpyrrolidone. A mixture of these solvents may also be used.

In a particular embodiment, the solvent used is cyclohexanone. In particular, it is believed that the use of cyclohexanone as a solvent and the use of the polycarbonate as thermoformable polymeric sheet has the advantage of greatly improving the penetration into the thermoformable polymeric sheet of the ink material containing the ink composition and the solvent in which the ink composition is soluble.

In some embodiments, the cured ink composition comprises the reaction product of a polyisocyanate and a compound having isocyanate reactive groups. Suitable isocyanate reactive groups include hydroxyl groups and amino groups. In some embodiments, the compound having isocyanate reactive groups is a polymeric compound (e.g., a polymeric polyol). Generally, the compound having isocyanate reactive groups comprises at least two, generally at least three isocyanate reactive groups. Examples of compounds having isocyanate reactive groups include polyols, in particular acrylic or methacrylic homo- or copolymers having hydroxyl groups, for example having at least three hydroxyl groups. Further suitable isocyanate reactive compounds include polyolefins having isocyanate reactive groups, polyesters having isocyanate reactive groups, polyurethanes having isocyanate reactive groups, and the lime. In some embodiments, the curable composition includes a caprolactone or caprolactone polyol (i.e., polycaprolactone) having isocyanate reactive groups, in particular having two or three hydoxy groups. More particularly, the curable composition can include a polyester polyol derived from caprolactone monomer, terminated by primary hydroxyl groups.

The molecular weight of the isocyanate reactive compound may vary widely and can be between 500 g/mol and 500,000 g/mol. In some embodiments, the molecular weight is at least 1000 g/mol, or even at least 10,000 g/mol. In some embodiments, the molecular weight is no greater than 100,000 g/mol, or even no greater than 80,000 g/mol. Simple low molecular weight compounds may be used as well including, e.g., alkane diols and alkane triols such as, e.g., glycerol, butane diol, and the like.

Generally, the properties of the ink composition can be tailored by altering the molecular weight and/or the functionality of the curable composition.

The total amount of isocyanate reactive compounds in the ink composition is typically between 1 and 20% by weight based on the total amount of solids in the ink composition. For example, in some embodiments, at least 2% or even at least 3%, and in some embodiments, no greater than 15%, or even no greater than 10% by weight. Generally, the higher the amount of isocyanate reactive compounds for the same ratio of isocyanate to isocyanate reactive compounds, the less flexible the resulting cured ink may become, although the kind and nature of the polyisocyanate and isocyanate reactive compounds may influence the resulting flexibility as well.

The polyisocyanate can aliphatic or aromatic. Generally the polyisocyanate compound is a di-isocyanate or tri-isocyanate. Polymeric or oligomeric isocyanate containing compounds may be used as well. Mixtures of different polyisocyanate compounds can be used as well. In some embodiments, when a mixture of polyisocyanate compounds is used, the average amount of isocyanate groups per molecule will be more than 2 for example at least 2.2 or at least 2.5. Specific examples include toluene-diisocyanate, toluene-triisocyanate, 2,6-toluylene diisocyanate, diphenylmethane diisocyanate, isophoronediisocyanate, hexamethylene diisocyanate, xylene diisocyanate, among others. The amount of polyisocyanate compounds in the curable composition is typically such that at least a stoichiometric amount and preferably an excess of isocyanate groups to isocyanate reactive groups in the composition is present. However it is also possible to use less than a stoichiometric amount.

The ink composition generally will further include a synthetic resin (generally not containing an isocyanate reactive group) such as, e.g., polyester-based resins, polycarbonate-based resins, polyvinyl chloride-based resins, acrylic-based resins, polycaprolactones, and the like. Mixtures of synthetic resins can be advantageously employed.

In some embodiments, the ink composition comprises a lactone or polylactone compound that may or may not have isocyanate reactive groups. The lactone or polylactone compounds suitable for use in accordance with the present invention advantageously has from about 3 to about 20 carbon atoms. Examples of suitable lactones include caprolactone, t-butyl caprolactone, zeta-enantholactone; delta-valerolactones; monoalkyl-delta-valerolactones, such as the monomethyl-, monoethyl-, and monohexyl-delta-valerolactones, and the like; monoalkyl, dialkyl, and trialkyl-epsilon-caprolactones such as the monomethyl-, monoethyl-, monohexyl-, dimethyl-, di-n-hexyl, trimethyl-, triethyl-epsilon-caprolactones, 5-nonyl-oxepan-2-one, 4,4,6- or 4,6,6-trimethyl-oxepan-2-one and the like; 5-hydroxymethyl-oxepan-2-one; beta-lactones, for example, beta-propiolactone; beta-butyrolactone or pivalolactone; gamma-lactones, such as gamma-butyrolactone; dilactones, such as lactide; dilactides; glycolides, such as tetramethyl glycolides, and the like; dioxanones, such as 1,4-dioxan-2-one, 1,5-dioxepan-2-one, and the like. The lactones can be the optically pure isomers or two or more optically different isomers or other mixtures. Epsilon-caprolactone and its derivatives, for example, methyl-epsilon-caprolactone, and other seven membered ring lactones are especially preferred.

The ink composition will generally also include colorants (e.g., dyes or pigments) to obtain an ink having a desired color. In some embodiments, the ink composition may contain metallic pigments and/or mica. The following components may also be added to the ink composition: matting agents, surfactants, stabilizers, plasticizers, extenders, biocides, and similar.

The total amount of solids in the ink composition may vary widely but is generally between 15% by weight and 60% by weight, for example between 20% by weight and 45% by weight or between 22 and 40% by weight.

The ink composition may be applied, e.g., screen-printed, on one or both major sides of the polymeric substrate. In one particular embodiment the ink composition is screen printed on the back side of the thermoformable sheet, i.e. the side opposite to the side that will define the exterior surface of the decorative article. In such a case, if the decoration involves an image, the image would be printed in reverse. In an alternative embodiment, the ink composition is printed on the side that forms the exterior surface of the decorative article and the image would thus be exposed on the surface of the decorative article. In such a case, it will generally be advantage to apply a clear coat on top of printed ink layer(s). Such a clear coat would serve as a protective layer (e.g., to provide abrasion resistance) and would typically be based on a curable composition, for example a composition similar to the curable composition included in the ink composition. Generally, the clear coat may be applied by screen printing as well, for example as a final printing after all ink layers have been printed. The clear coat may also be provided as a continuous layer overlaying printed as well as non-printed layers. According to yet a further embodiment, the ink composition is printed on both sides of the polymeric substrate. This allows for obtaining special graphical effects that may desired in a particular application such as, for example, an image or graphic including glossy printing overlaid with matte printing designs.

Following application of the curable ink composition to a major surface of the polymeric substrate, the curable ink composition is cured. Curing typically involves a cross-linking reaction of the polyisocyanate and the compound having isocyanate reactive groups. In some embodiments, the curing is heat activated, e.g., by irradiation of the printed substrate with infrared light. A catalyst for accelerating the curing of the curable composition may also be used in the ink composition such that less energy will be required to activate the cross-linking reaction.

Typically, the curing step involves heat activation to a temperature of up to 90°C, up to 120°C, or even more, depending on the materials chosen. It can be desirable for the curing step to involve heat activation to a temperature of, for example, from 30°C to 80°C, or from 40°C to 60°C. Varying temperature profiles may be used to cause curing.

Generally, heat activation should proceed for a time sufficient to obtain a desired level of curing such that a subsequent color can be printed without blending the different colors together. Depending on the ink composition, this time can be between for example 0.5 and 5 minutes. Further, subsequent of the printing of the different colors, a further heat activation may be employed to fully cure the curable composition in the ink composition(s). Generally, this further heat activation will take at least 30 minutes, for example at least one hour and may be up to several hours. A full cure may also take several days (e.g., 3 days). Also, a higher temperature may be used in this further heat activation and curing. Cured, printed sheets may be stored until needed.

In some embodiments, the thermoformable sheet further comprises a thermoformable adhesive layer. For example, in some embodiments, the thermoformed article is provided having a printed ink composition and an adhesive layer having a structured surface comprising microchannels defining between them raised areas. Thermoformed articles having an adhesive layer with a structured surface allow an easier and convenient application, in particular when the thermoformed sheet is thin. In such a case, the entrapment of air may cause a less than optimal adherence of the article to a part to be decorated or it may cause disturbance of the design of the article, in particular when the sheet is transparent or translucent.

In some embodiments, the adhesive layer may be applied to the second major surface of the polymeric substrate, followed by printing on the first major surface of the polymeric substrate. Alternatively, the thermoformable polymeric sheet may be printed first and then the adhesive layer may be applied followed by thermoforming. For example, in one embodiment, the ink composition is printed on the first major surface of the polymeric substrate and then the thermoformable adhesive layer is applied on top or over the printed ink composition or coating. In another embodiment, the adhesive layer may be applied to second major surface of the polymeric substrate opposite to the printed ink composition. In the latter embodiment, it will be appreciated that the adhesive layer can also be provided first on one surface of the polymeric substrate followed by printing of the ink on the opposite side. It is further contemplated to apply a thermoformable adhesive layer on both major sides of the polymeric substrate. Also, when printing is carried out on both sides of the polymeric sheet, the thermoformable adhesive layer may be applied on one or both printed sides of the polymeric sheet.

Generally, the adhesive layer comprises a thermoformable adhesive. An adhesive layer is considered to be thermoformable within the scope of the present application if the adhesive layer is capable of being co-formed with the polymeric substrate in the thermoforming step. This typically requires that the adhesive layer have a softening point similar to or below the softening point of the thermoformable polymeric sheet. It will further generally be preferred that the adhesive layer does not become too soft or liquid which could cause undesirable flow of the adhesive during the thermoforming step. Generally, the adhesive layer should also retain its function or capability to adhere the polymeric substrate and to another substrate following thermoforming. This is however not a requirement in case the adhesive layer is a heat activatable adhesive layer and the substrate(s) or layer(s) to which the adhesive layer is to be adhered is co-formed with the adhesive layer and polymeric sheet in the thermoforming step. In this case, advantage can be taken of the heat in the thermoforming step to simultaneously activate the adhesive during thermoforming thereby adhering the adhesive layer to the co-formed substrate or layer.

Suitable thermoformable adhesives include pressure sensitive adhesives as well as heat activatable adhesives. Heat activatable adhesives include adhesives that are essentially non-tacky at ambient temperature and that become tacky at elevated temperatures. A heat activatable adhesive layer may however also be tacky at ambient temperature but reach its full adhesive characteristics at elevated temperature such that the desired bond strength is obtained by activating the adhesive at elevated temperature, bonding the desired substrate thereto and then cooling the substrate. Heat activatable adhesive layers also include adhesives that cross-link upon activation. As mentioned above, the heat activatable adhesive layer may be used to bond to a desired layer or substrate simultaneously in the thermoforming step. In such a case, the temperature needed to activate the adhesive should be similar to the temperature used in the thermoforming step to form the printed polymeric sheet. Alternatively, if it is desired that the heat activatable adhesive be used to adhere to a substrate following the thermoforming step, it will generally be preferred that the temperature required to activate the adhesive be higher then the temperature used during the thermoforming step such that the adhesive is not activated during the thermoforming. This is particularly so if the heat activatable adhesive layer is a cross-linking adhesive. In case the heat activatable layer is of the type that becomes tacky or increases tackiness upon heating, the activation temperature may coincide with the temperature of thermoforming.

Generally, the adhesive layer may be protected with a thermoformable release liner, in particular when the adhesive layer is a pressure sensitive adhesive or an adhesive that becomes tacky during the thermoforming step. Suitable thermoformable release liners include polyethylene or polypropylene films that may be coated with a release coating such as for example a silicone release coating. It will generally also be preferred that the polyethylene or polypropylene film has a crystalline melting point below the softening point of the thermoformable polymeric sheet.

Generally, the methods of custom decorating an article include obtaining a design; converting the design into three-dimensional coordinate data; and using the data to create a relief-patterned surface on a mold.

A wide variety of methods may be employed to obtain a design. In some embodiments, the initial design is two-dimensional. For example, a customer may provide a drawing or writing, e.g., a signature in a tangible format, e.g., on a sheet of paper. In some embodiments, the design may be obtained from a photograph or picture. In some embodiments, the design may be computer-generated and, optionally, printed. In some embodiments, the original design may be based on a three-dimensional object. For example, the customer may provide an object, e.g., a geometrical structure, a logo, a figure, and the like.

Generally, any known method may be used to convert the design in to three-dimensional coordinate data. For example, two-dimensional designs (e.g., signatures, pictures, and the like) may be scanned, optionally stored, and ultimately manipulated into three-dimensional coordinate data. In the case of some two-dimensional designs, additional customization may be provided by altering the three-dimensional characteristics of the final data. For example, in the case of a signature, the height or depth or certain letters, or parts of letters maybe varied, as desired. Three-dimensional designs may be converted into three-dimensional coordinate data using, for example, a three-dimensional scanner or laser profilometry.

Generally, commonly available software maybe used to convert designs in to three-dimensional coordinates. In some embodiments, the design may be input into a CNC device. Common software (e.g., CAD software) may then be used to generate three-dimensional coordinate data corresponding to the design.

In some embodiments, the process begins with a pre-existing mold or part. In such embodiments, software is used to manipulate the desired design such that it conforms to the surface of the mold or part. Software is also used to generate the three-dimensional coordinate data (e.g., the tool tracking data) used to create (e.g., mill) the relief-patterned surface on a mold corresponding to the desired design.

In some embodiments, the process includes both forming the mold or part, and creating the relief-patterned surface on the mold or part. For example, data describing the desired mold or part may be obtained, e.g., from the customer or from a data base. Using this data, software may be used to conform the custom design to the mold or part. Finally, software may be used to generate three-dimensional coordinate data (e.g., tool tracking data) used by, e.g., a CNC milling machine to form a mold or part having the desired relief-patterned surface. In some embodiments, the mold or part may be formed in a first step, followed by the formation of the desired relief-patterned surface. In some embodiments, the mold or part having the desired relief-patterned surface is generated in a single step.

Generally, the three-dimensional coordinate data are used to create the appropriate mold for thermoforming. For example, in some embodiments, the three-dimensional coordinate data are referred to as tool tracking data and are used to control the motion of a tool of the CNC milling device. The milling tool, e.g., a spherical tipped milling tool, is used to remove material from a surface of a mold to create relief-patterned surface corresponding to the desired three-dimensional decoration. In particular, the mold may be formed using CNC milling techniques that use CAD data (e.g., iges files or catia files) to describe the desired three-dimensional geometry required to form the desired article. The CNC machine may be so-called 3 axis vertical milling machines or so-called 5 axis milling machines. Other equipment suitable for forming the relief-pattern and/or the mold include laser cutting (e.g., laser ablation) and water jet cutting devices.

Typically, the mold can be made in an inexpensive way through machining of a suitable material such as resin or metal such as aluminium, brass or magnesium. In some embodiments, the desired final part itself may be used as the mold.

Referring to **FIG. 2**, in some embodiments, the material removed from the mold surface corresponds to the desired decoration; i.e., decoration **101** is recessed relative to the surface **121** of mold **120.** Referring to **FIG. 3**, in some embodiments, the material surrounding the desired decoration is removed, i.e., decoration **201** is elevated relative to surface **221** of mold **220.**

Generally, following the creation of the mold, and the thermoformable sheet is contacted with the relief-patterned surface of the mold; and thermoformed to provide a decoration corresponding to the design. Thermoforming is generally performed by inserting the thermoformable polymeric sheet comprising the polymeric substrate and, optionally, the ink layer and/or the thermoformable adhesive, into a thermoforming machine. The sheet may be maintained in a fixed position by, e.g., clamping in order to provide a uniform thermoforming step.

The thermoformable sheet is then heated by, e.g., infrared or other radiant heat source to soften the materials. Generally the temperature and time of the heating operation depends upon the nature of the various layers of the thermoformable sheet including, e.g., the polymeric substrate.

When the sheet is sufficiently soft, the custom created mold may be pressed into the printed side (or optionally into the unprinted side) of the sheet. Generally, the softened sheet is allowed to tightly wrap the mold form, taking on its shape permanently. In a particular embodiment, the sheet is pressed between a male and female component of a mold. Vacuum is generally applied to allow the sheet to better wrap the mold. After the sheet has obtained its shape, cooling air may be applied to harden the sheet and to allow it to reach a solid shape.

In some embodiments, the thermoformed sheet may be removed from the mold and applied to an article to provide a decorated article. For example, the thermoformed sheet may then be mounted, e.g., on the part of a vehicle that is to be decorated. In one embodiment the part may be mounted or fixed to the vehicle by a mechanical fastener such as for example screws. In another embodiment, the decorative part may be glued and adhered to the part of the vehicle that is to be decorated. To glue the part to the vehicle any type of adhesive can be used including pressure sensitive adhesives, heat activatable adhesives including hot-melt adhesives as well as cross-linking adhesive compositions. In one aspect of this embodiment, a liquid adhesive composition may be applied on the vehicle part to be decorated and/or on the decorative part and the two may then be adhered together. In yet another aspect of this embodiment, a double sided adhesive tape may be used to adhere the two parts together.

In a further embodiment, a reclosable fastener may be used such as a hook and loop system including for example DUAL LOCK fasteners available from 3M Co. Thus, in this case one of the matting parts of the hook and loop system would be adhered to the decorative part and the other would be applied to the part of the vehicle to be decorated. Pressing the two matting parts into each other then mechanically fastens the decorative part to the vehicle part.

In alternative embodiments, the mold itself may be a part that is to be decorated with the thermoformed printed sheet. For example, in some embodiments, the three-dimensional coordinate data are used to control the motion of a tool of a CNC device. The tool is used to remove material from a surface of the part itself to create a relief-patterned surface corresponding to the desired three-dimensional decoration. This part is then used as the mold in the thermoforming operation described previously.

In some embodiments where the part itself functions as the mold, the thermoformed sheet need not be removed from the part following the thermoforming process. Rather, the thermoformed sheet remains with the part forming the desired decorated article.

In some embodiments, the thermoformed sheet may be subjected to finishing steps including cutting, e.g., by die-cutting, to give it the final shape. In some embodiments, additional layers, e.g., a transparent coating, may be applied to the decorative surface as, e.g., a protective layer.

The article used in the method of the invention can be any article having a decorative surface, e.g., parts used in the motor bike or automotive industry, in particular used as external articles, such as, for example, side or front mounted rearview mirror covers or housings, pillars, motorbike gas tank covers, head lamps, sunroofs, window supports, or similar parts. The article can also be used in portions of the interior of, for example, a motor vehicle or other vehicle. Such vehicle interior portions can include such as, for example, in cockpit parts of the instrumental panels, in door traps or interior door trims, video display moldings, and the like.

The invention is further illustrated with reference to the following examples without the intention however to limit the invention thereto.

Example 1

Example 1 demonstrates the preparation of a decorative part of an exterior door handle of a motor vehicle with a customized hand-written customer signature. The part itself served as the thermoforming mold.

**Table 1: MATERIALS of the Ink Composition**

| **Component** | **Description** | **Parts by weight** |
|---|---|---|
| **D7900** | Clear base ink for preparing desired colored inks commercially available from 3M Company. The clear base ink is based on a PVC resin and acrylic resin and containing a solvent mixture of cyclohexanone, aromatic solvents and ethylene glycol butyl ether acetate. | 30 |
| **P1** | Colored pigment dispersion commercially available from Kiian S.P.A. Luisago, Italy with trade name Mankounian -Argon Thermoplus 49.000 series and intended for blending with D7900 clear resin. | 60 |
| **JONCRYL 587** | Acrylic polyol commercially available from Johnson Polymer LLC (Sturtevant, Wisconsin) | 0.83 |
| **TONE 200** | Polycaprolactone diol commercially available from Dow (Midland, Michigan) | 0.41 |
| **HMDI** | Hexamethylene di-isocyanate, Desmodur(tm) N 3390 BA/SN, commercially available from Bayer (Bayer Material Science AG, 51368 Leverkusen, Germany). | 0.4 |
| **Desmophen A450M PA/X** | Acrylic polyol available from Bayer | 0.46 |
| **CGS 80** | Thinner commercially available from 3M Co. | 5.7 |

The ink composition of Example 1 was obtained by combining the components set forth in Table 1 along with 0.0002 parts by weight dibutyltindilaurate; 0.00035 parts by weight Zinc napthenate; and 0.000029 parts by weight dimethly polysiloxane.

A thermoformable sheet was prepared as follows. A sheet of a clear polycarbonate MAKROFOL^{™} (available from Bayer AG, Germany) having a thickness of 0.8 mm was screen-printed, using a commercially available flat-bed screen-printer. In order to obtain the desired design on the ultimate three-dimensioanl part a NURBS (Non-Uniform Rational B-Splines) software known as Rhino V 4.0 (commercially available by Filou Software GmbH, Rheda-Wiedenbrück, Germany) was used. The screen-printing took place in two steps using the prior described ink composition.

The printed sample was dried in a flat bed oven having four stations. This drying step was done after each color printing. The samples passed through the heating zones at a line speed of 5.5 meters per minute. The total oven length was about 5.5 meters. The temperatures of the four heating zones were as follows: zone 1: 50 °C, zone 2: 60 °C, zones 3 and 4: room temperature ventilation, maximum temperature 35 °C. After the second printing and drying cycle, the obtained printed samples were cured at 60 °C for 2 hours. The dried ink coating had a thickness of about 6 to 10 µm.

An injection molded door handle made from a thermoplastic ABS/PC blended resin was used directly as the mold. In Example 1, the customized door handle contained an engraved hand-written customer signature on its upper surface.

To obtain the customized mold of Example 1 the following steps were undertaken. First, the design was obtained in the form of a hand-written signature. The signature was scanned at a resolution of 1140 by 480 dpi and stored in JPEG format. The scan data was transferred from the scanner to a CNC device (a five-axis CNC milling machine available from Belotti S.p.A. (Sussio, Italy)) using a USB key Jet Flash V10 2.0 flash drive (commercially available from Trascendent).

Software present on the CNC device was used to convert the two-dimensional scan data into the three-dimensional tool tracking data. These three-dimensional data were used to control the motion of the CNC tool to remove materials from the ABS/PC resin door handle. The material corresponding to the design (i.e., the signature) was removed creating a recess in the surface of the door handle (i.e., the mold) corresponding to the signature.

The printed sheet was applied to a Cannon vacuum thermoformer model number FORMA™ 1200 (Corso Novara 179 - 27029 Vigevano (PV) - Italy), in such a way that the printed area was facing the door handle in contact with the customized engraved signature. Hereby the engraved door handle functioned as a male mold meaning it functioned as the downside part of the thermoforming equipment. After applying heat such that the sheet became flexible, a vacuum was applied, which led to a wrap-up of the sheet around the outside of door handle. The temperature of the polycarbonate thermoforming process was around 145°C (following ISO 360 method B50) and the temperature was held for 1 minute.

The custom decorated article comprising the now thermoformed sheet attached to the door handle was removed and visually inspected. No cracks were observed in the printed image.

Various modifications and alterations of this invention will become apparent to those skilled in the art without departing from the scope and spirit of this invention.

## Claims

**1.** A method of obtaining a custom decorated article comprising
(a) obtaining a design;
(b) converting the design into three-dimensional coordinate data;
(c) using the data to create a relief-patterned surface on a mold;
(d) contacting a thermoformable sheet with the relief-patterned surface of the mold; and
(e) thermoforming the thermoformable sheet to provide a thermoformed sheet comprising a three-dimensional decoration corresponding to the design.

**2.** The method of claim 1, wherein obtaining the design comprises scanning an image.

**3.** The method according to any one of the preceding claims, wherein the design comprises a signature.

**4.** The method according to any one of the preceding claims, wherein using the data to create a relief-patterned surface on a mold comprises using the data to control the motion of a tool that removes material from a surface of the mold.

**5.** The method of claim 4, wherein a CNC device is used to control the motion of the tool.

**6.** The method according to any one of the preceding claims, wherein thermoforming the thermoformable sheet comprises heating the thermoformable sheet, pressing the mold against the thermoformable sheet, and applying vacuum thereto to allow the thermoformable sheet to wrap around the relief-patterned surface of the mold.

**7.** The method according to claim 6, further comprising removing the thermoformed sheet from the mold; and mounting the thermoformed sheet on a part to form the custom decorated article.

**8.** The method according to any one of claim 7, wherein the mold is a part and the thermoformed sheet remains in contact with the part to form the custom decorated article.

**9.** The method according to any one of the preceding claims, wherein the polymeric substrate comprises a material selected from the group comprising polycarbonate, polyethyleneterephthalate glycol (PETG), acrylonitrile butadiene styrene (ABS), thermoplastic polyolefin (TPO), polypropylene, acrylic compounds and mixtures thereof.

**11.** The method according to any one of the preceding claims, wherein the thermoformable sheet further comprises an ink layer.

**12.** The method of claim 11, wherein the ink layer is obtained by screen printing a curable ink composition on a first major surface of the thermoformable substrate and curing the curable ink composition.

**13.** The method according to claim 12, wherein curable ink composition comprises a component having isocyanate reactive groups and a polyisocyanate.

**14.** The method according to any one of claims 11 to 13, wherein contacting the thermoformable sheet with the relief-patterned surface of the mold comprises contacting the ink layer with the relief-patterned surface of the mold.

**15.** The method according to any one of the preceding claims, wherein the thermoformable sheet further comprises a thermoformable adhesive layer.

**16.** A custom decorated article obtainable by the method of any one of the preceding claims.
